# EUROPEAN PATENT APPLICATION

(11) **EP 4 531 367 A1**
(43) Date of publication of application: **02.04.2025**
(21) Application number: 24199094.4
(22) Date of filing: 06.09.2024
(51) Int. Cl.: H04L 45/24, H04L 45/125, H04L 45/12, H04L 45/16

(54) **ROUTING ADJUSTMENT METHOD, APPARATUS, AND ELECTRONIC DEVICE**

(30) Priority: 27.09.2023 CN 202311272277
(71) Applicant: New H3C Technologies Co., Ltd., Hangzhou, Zhejiang 310052 (CN)
(72) Inventor: YE, Jinrong, Beijing, 100102 (CN); ZHONG, Haina, Beijing, 100102 (CN)
(74) Representative: IPAZ

(57) **Abstract**

Disclosed are a routing adjustment method, apparatus, and an electronic device. In an example, if congestion occurs on the first path with the highest forwarding weight ,i.e., the optimal forwarding path for data stream, instead of directly abandoning the first path, the forwarding weights of the first path and other non-optimal path(s) (other path(s) with forwarding weight(s) lower than that of the first path) are dynamically adjusted, so that the data stream intended to be forwarded through the first path is forwarded through a combination of the first path and other path(s), thereby improving link bandwidth utilization.

## Description

### TECHNICAL FIELD

The present disclosure relates to the field of network communication, and particularly relates to a routing adjustment method, apparatus, and an electronic device.

### BACKGROUND

Adaptive routing is a technology of performing a dynamically routing decision based on changes in network topology and traffic load. When specifically implementing the adaptive routing, it is necessary to maintain an optimal path (best path) table for storing an optimal path. However, if the optimal path stored in the best path table encounters an abnormality, such as congestion, the entire optimal path will no longer be used for packet forwarding.

### SUMMARY

In view of this, the present disclosure provides a routing adjustment method, apparatus, and an electronic device, so that a packet intended to be forwarded through an optimal path is forwarded through a combination of the optimal path and other non-optimal paths when an abnormality occurs on the optimal path for the packet.

According to a first aspect of examples of the present disclosure, a routing adjustment method is provided, which is applied to a first network node in a topological networking consisting of multiple node groups (Groups), wherein any two network nodes within a same Group are interconnected, and network nodes within different Groups are interconnected, and the first network node is located in a first Group. The method comprises:
determining, by the first network node as an ingress node for any data stream entering the topological networking, a multipath group for forwarding the data stream, wherein the multipath group includes following paths: at least one optimal path for forwarding the data stream, and at least one non-optimal path for forwarding the data stream; wherein the non-optimal path refers to a loop-free path other than the optimal path; each path in the multipath group is set with a corresponding forwarding weight, with a forwarding weight of the optimal path being greater than that of the non-optimal path; the multipath group is associated with a remote Group, which refers to a Group where a network node accessed by a destination of the data stream is located;
receiving, by the first network node, a Route Advertisement Notification (ARN) sent by a second network node in a same Group through a first interface; wherein the ARN is sent by the second network node when congestion on a local second interface is detected; the ARN carries information indicating a second Group and congestion parameters, wherein the second Group refers to a Group where a peer network node connected to a congested second interface is located; the congestion parameters are used to indicate a cause of the congestion on the second interface;
finding, by the first network node, a target multipath group from the multipath groups of data streams, wherein a remote Group associated with the target multipath group is the second Group; adjusting, based on the congestion parameters, a forwarding weight of a first path with a highest forwarding weight and forwarding weight(s) of other path(s) with lower forwarding weight(s) than that of the first path in the target multipath group, wherein the first path is a path where the first interface is located, an adjusted forwarding weight of the first path is less than that before adjustment, and adjusted forwarding weight(s) of the other path(s) are greater than that/those before adjustment, so that a packet intended to be forwarded through the first path is forwarded through a combination of the first path and the other path(s).

According to a second aspect of the examples of the present disclosure, a routing adjustment apparatus is provided, which is applied to a first network node in a topology networking consisting of multiple node groups (Groups), wherein any two network nodes within a same Group are interconnected, and network nodes within different Groups are interconnected, and the first network node is located in a first Group. The apparatus comprises:
a determining unit, to determine, when the first network node serves as the ingress node for any data stream entering the topology networking, a multipath group for forwarding the data stream; wherein the multipath group includes following paths: at least one optimal path for forwarding the data stream, and at least one non-optimal path for forwarding the data stream; wherein the non-optimal path refers to a loop-free path other than the optimal path; each path in the multipath group is set with a corresponding forwarding weight, with a forwarding weight of the optimal path being greater than that of the non-optimal path; the multipath group is associated with a remote Group, which refers to a Group where a network node accessed by a destination of the data stream is located;
a receiving unit, to receive a Routing Congestion Notification (ARN) sent by a second network node in a same Group through a first interface of the first network node, wherein the ARN is sent by the second network node when congestion on a local second interface is detected; the ARN carries information indicating a second Group and congestion parameters, the second Group refers to a Group where a peer network node connected to a congested second interface is located, the congestion parameters are used to indicate a cause of the congestion on the second interface;
an adjustment unit, to find a target multipath group from the multipath groups of data streams, wherein a remote Group associated with the target multipath group is the aforementioned second Group; adjust, based on the congestion parameters, a forwarding weight of the first path with a highest forwarding weight and forwarding weight(s) of other path(s) with lower forwarding weight(s) than the first path in the target multipath group; wherein the first path is a path where the first interface is located, and an adjusted forwarding weight of the first path is less that that before adjustment, and adjusted forwarding weight(s) of the other path(s) are greater than that/those before adjustment, so that a data stream intended to be forwarded through the first path is forwarded through a combination of the first path and the other path(s).

According to a third aspect of the examples of the present disclosure, an electronic device is provided, which includes:
a processor and a machine-readable storage medium, wherein the machine-readable storage medium stores machine-executable instructions that can be executed by the processor;
the processor is to execute the machine-executable instructions to implement the method described above.

The technical solutions provided by the examples of the present disclosure can include the following beneficial effects:
In examples, if congestion occurs on the first path with the highest forwarding weight (i.e., the optimal forwarding path for the data stream), instead of directly abandoning the first path, the forwarding weight of the first path and the forwarding weight(s) of other non-optimal path(s) (other path(s) with forwarding weight(s) lower than that of the first path) are dynamically adjusted, so that the data stream intended to be forwarded through the first path is forwarded through a combination of the first path and other path(s), thereby improving the utilization rate of link bandwidth.

### BRIEF DESCRIPTION OF THE DRAWINGS

Figure 1 is a schematic diagram of a dragonfly topology networking illustrated in an example of the present disclosure;
Figure 2 is a schematic diagram of an application of the dragonfly topology networking illustrated in an example of the present disclosure;
Figure 3 is a flowchart of the method illustrated in an example of the present disclosure;
Figure 4 is a schematic diagram of ARN forwarding illustrated in an example of the present disclosure;
Figure 5 is a schematic diagram of software forwarding entries illustrated in an example of the present disclosure;
Figure 6 is a schematic diagram of hardware forwarding entries illustrated in an example of the present disclosure;
Figure 7 is a schematic diagram of software and hardware forwarding entries illustrated in an example of the present disclosure;
Figure 8 is a flowchart of implementing block 303 provided in an example of the present disclosure;
Figure 9 is a diagram of a structure of the apparatus illustrated in an example of the present disclosure;
Figure 10 is a diagram of a hardware structure of the apparatus illustrated in an example of the present disclosure.

### DETAILED DESCRIPTION

Illustrative examples will be described in detail herein with the examples thereof expressed in the drawings. When the following descriptions involve the drawings, like numerals in different drawings represent like or similar elements unless stated otherwise. The implementations described in the following examples do not represent all implementations consistent with the present disclosure. On the contrary, they are merely examples of an apparatus and a method consistent with some aspects of the present disclosure described in detail in the appended claims.

The terminology used in the present disclosure is for the purpose of describing a particular example only, and is not intended to be limiting of the present disclosure. The singular forms such as "a", "said", and "the" used in the present disclosure and the appended claims are further intended to include multiple, unless the context clearly indicates otherwise. It is also to be understood that the term "and/or" as used herein refers to any or all possible combinations that include one or more associated listed items.

It is to be understood that although different information may be described using the terms such as first, second, third, etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, the word "it" as used herein may be interpreted as "when" or "as" or "in response to determine".

A network scenario provided by an example of the present disclosure is described as follows.

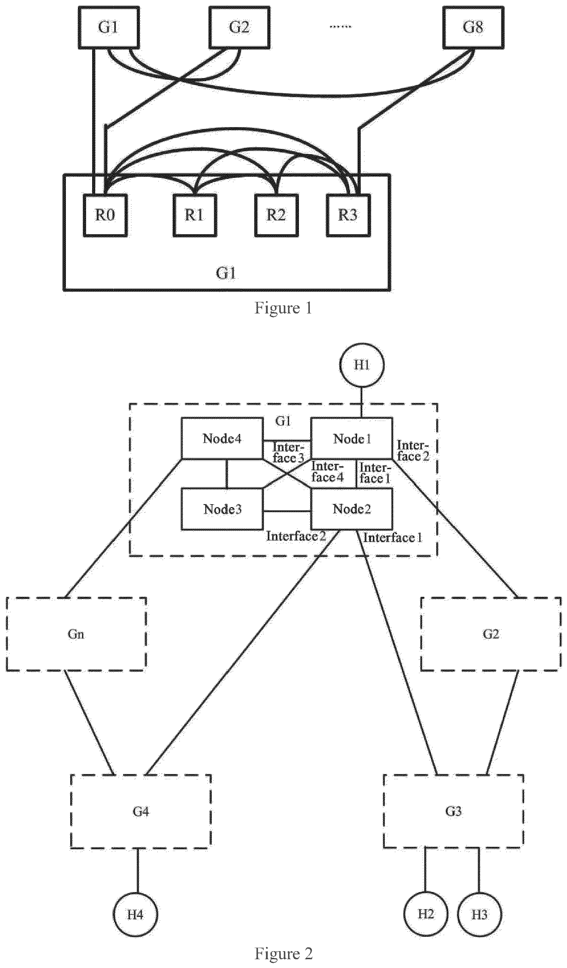

This example can be applied to a specified topology networking such as a dragonfly topology networking. In this example, the specified topology network consists of multiple node groups (Groups). All intra-Group and inter-Group network nodes establish a full-mesh connection., i.e. each pair of Groups is connected by means of at least one link to interconnect network nodes in the pair of Groups, and any network node within each Group is directly connected to other network nodes in the same Group. Taking a dragonfly topology networking as an example, a dragonfly topology networking consists of multiple Groups (abbreviated as G). As shown in Figure 1, the dragonfly topology networking includes Group0 (G0), Group 1 (G 1), Group2 (G2), ..., Group8 (G8). In this example, all intra-Group and inter-Group network nodes shown in Figure 1 establish a full-mesh connection, meaning that each pair of Groups is connected by means of a link to interconnect network nodes in the pair of Groups, and any network node within each Group is interconnected with other network nodes in the same Group.

Within the specified topology networking, such as the dragonfly topology networking, a node designated as an ingress node for a data stream will determine a corresponding multipath group for the data stream. The multipath group herein may include the following paths: an optimal path for forwarding the data stream calculated by an optimal path algorithm, as well as loop-free path(s) other than the optimal path (referred to as non-optimal path(s)). Optionally, there can be one or more optimal paths (such as equivalent optimal paths) and one or more loop-free non-optimal paths within the multipath group. This example does not specifically limit the number of these paths.

Additionally, in an example, a network node in a same remote Group can be reached through the optimal path and through the loop-free non-optimal paths within the multipath group. The remote Group here could be a Group where a network node accessed by a destination of the data stream, such as a host, is located. Therefore, a multipath group of any given data stream corresponds to remote group of the data stream.

The multipath group of a data stream is described with reference to the dragonfly topology networking as shown in Figure 2:

As shown in Figure 2, host H1 is connected to a network node (Node1) in Group1 (G 1), hosts H2 and H3 are connected to network node(s) in Group3 (G3), and host H4 is connected to network node(s) in Group4 (G4). Taking data streams 1-3 from host H1 to hosts H2 or H3 as an example, if Node1 in Group 1 (G1) is an ingress node for data streams 1-3 entering the dragonfly topology networking, Node1 may establish a multipath group for data streams 1-3.

Optionally, after route calculation, Node 1 determines that a multipath group for data streams 1-3 includes two following paths: Path 1 (specifically, an optimal path for data streams 1-3) and Path 2 (specifically, a loop-free non-optimal path for data streams 1-3). If a destination of data streams 1-3, such as host H2 or host H3, is connected to network node(s) in Group3 (abbreviated as G3), then Group3 (G3), as the remote Group of data streams 1-3, corresponds to the multipath group of data streams 1-3. This ultimately realizes the determination of the multipath group for data streams 1-3. It should be noted that, as an example, when destinations of multiple data streams, such as the destination IP addresses or IP network segments, are same, these data streams can share a same multipath group.

In this example, each path in the multipath group has a corresponding forwarding weight. The forwarding weight of any path indicates a priority of the path for data stream forwarding. The forwarding weight of an optimal path is greater than that of a non-optimal path. Initially, the forwarding weight of any path in the multipath group is determined based on whether the path is an optimal path for forwarding the data stream. Specifically, for any path in the multipath group, if the path is the optimal path for forwarding the data stream, the forwarding weight of the path is determined based on the total number of optimal paths in the multipath group used to forward that data stream. If the path is not the optimal path for forwarding the data stream, the forwarding weight of the path can be directly set to be a preset value, such as 0.

Taking the multipath group of data streams 1-3 as an example, initially, Path 1 is the optimal path for forwarding data streams 1-3, and there is only one such optimal path of data streams 1-3 (i.e., Path 1), so the weight of Path 1 can be determined as a first value, such as 1. Of course, if there are k optimal paths (k is greater than 1) for data streams 1-3, the weight of Path 1 can be determined as a second value, such as (1/k). In the multipath group of data streams 1-3, Path 2 is not an optimal path for forwarding data streams 1-3, so the forwarding weight of the path can be determined to be a preset value, such as 0.

Based on the above description, the method provided in an example of the present disclosure will be described below.

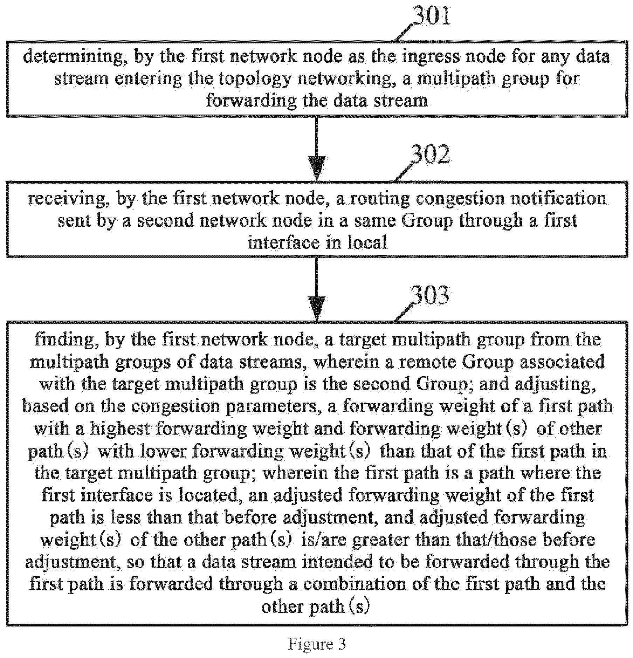

Referring to Figure 3, Figure 3 illustrates a flowchart of the method provided in the example of the present disclosure. This process can be applied to a network node (hereinafter referred to as the first network node for convenience of description) in the aforementioned topology networking. The first network node is assumed to be located in the first Group. As shown in Figure 3, the process can include the following blocks:
Block 301: determining, by the first network node as the ingress node for any data stream entering the topology networking, a multipath group for forwarding the data stream.

In this example, the multipath group is specifically described above and will not be repeated here.

Block 302: receiving, by the first network node, a routing congestion notification sent by a second network node in a same Group through a local first interface.

In this example, each network node in any Group sets congestion detection parameters for its local inter-group interconnection interfaces. Here, the local inter-group interconnection interface of a network node in any Group refers to the interface of the network node that locally connects to other Groups. For example, in Figure 2, Interface 1 of Network Node 2 (abbreviated as Node 2) connects to G3, so Interface 1 of Node 2 is the local inter-group interconnection interface of Node 2.

In addition, in this example, the above-mentioned congestion detection parameters may include bandwidth occupancy level and buffer occupancy level, with upper and lower threshold values set respectively (the upper threshold value is greater than the lower threshold value).

Based on this, in this example, each network node in any Group detects the currently occupied bandwidth level and currently occupied buffer level of each local inter-group interconnection interface respectively, and comprehensively determines whether there is a congestion based on detection results. For example, for each inter-group interconnection interface, if it is detected that at least one of the currently occupied bandwidth level and the currently occupied buffer level of the inter-group interconnection interface is greater than the respective upper threshold value, it is determined that congestion occurs on the inter-group interconnection interface. Conversely, if it is detected that both the currently occupied bandwidth level and the currently occupied buffer level of the inter-group interconnection interface are less than the respective lower threshold value, it is determined that no congestion occurs on the inter-group interconnection interface.

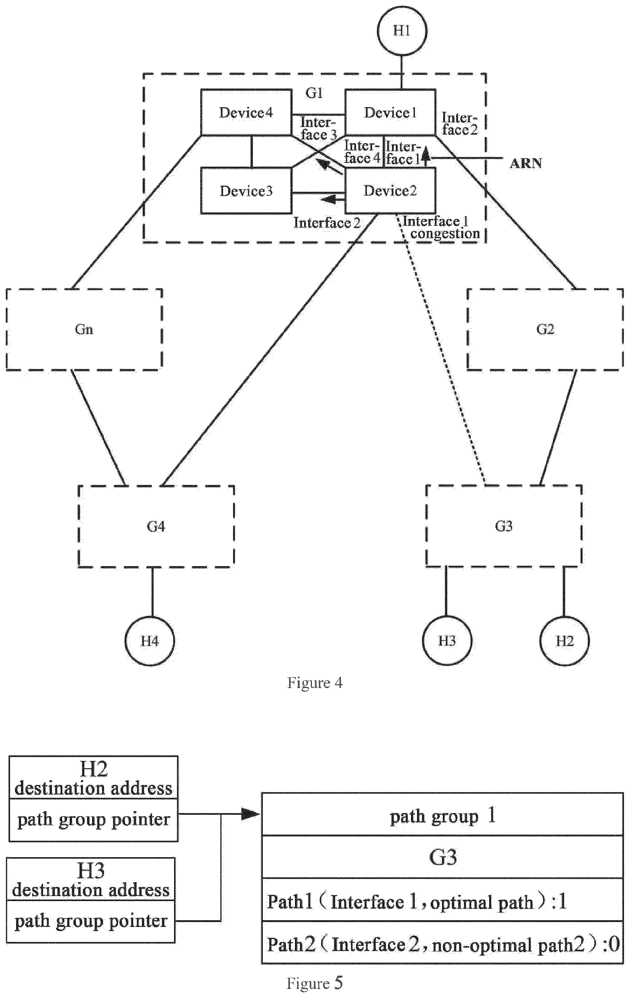

In this example, when any network node in any Group detects a congestion on a local inter-group interconnection interface, such as Node 2 detecting a congestion on its local Interface 2 serving as an inter-group interconnection interface as shown in Figure 4, the network node sends a routing congestion notification (also known as Adaptive Routing Notification, ARN) to other network node(s) in the same Group. In this example, the ARN may carry the information indicating the Group connected by the congested inter-group interconnection interface and congestion parameters. Figure 4 shows the forwarding of ARN.

In this example, the ARN sent by any network node in any Group is a User Datagram Protocol (UDP) packet with a destination IP address set to a specified multicast address, such as 224.0.0.2, to ensure that other network node(s) in the same Group receive(s) the ARN. Additionally, an UDP destination port of the ARN is set to a specified port, such as 53344. It can be seen that in this example, the packet format of ARN is simple, facilitating hardware implementation, and only requires a single-hop notification, eliminating the problem of ARN packet reordering. When any network node in any Group detects congestion on a local inter-group interconnection interface, the network node directly sends an ARN without relying on routing protocols, ensuring high real-time performance and efficiency.

Based on the above description, in Block 302, the ARN is sent by the second network node upon detecting the congestion on its local second interface; the ARN carries the information indicating the second Group and congestion parameters; the second Group refers to a Group where a peer network node connected by the congested second interface is located, and the second interface is an inter-group interconnection interface connecting the second network node to the second Group, which is different from the first Group.

Additionally, in this example, the congestion parameters are used to indicate a cause of the congestion on the second interface.

In this example, when any network node in any Group, such as the aforementioned first network node, receives an ARN, the network node will execute the description of Block 303 below.

Block 303: finding, by the first network node, a target multipath group from the multipath groups of data streams, wherein a remote Group associated with the target multipath group is the second Group; and adjusting, based on the congestion parameters, a forwarding weight of a first path with a highest forwarding weight and forwarding weight(s) of other path(s) with lower forwarding weight(s) than that of the first path in the target multipath group; wherein the first path is a path where the first interface is located, an adjusted forwarding weight of the first path is less than that before adjustment, and adjusted forwarding weight(s) of the other path(s) is/are greater than that/those before adjustment, so that a data stream intended to be forwarded through the first path is forwarded through a combination of the first path and the other path(s).

It can be seen that in this example, when the first path with the highest forwarding weight (i.e., the optimal forwarding path for the data stream) experiences congestion, instead of directly abandoning the first path, the forwarding weight of this first path and the forwarding weight(s) of other non-optimal path(s) (with lower forwarding weight(s) than the first path) are dynamically adjusted, so that the data stream intended to be forwarded through the first path is forwarded through a combination of the first path and other path(s), thereby improving link bandwidth utilization.

As for how to adjust the forwarding weight of the first path with the highest forwarding weight and the forwarding weight(s) of other path(s) with lower forwarding weight(s) than that of the first path in the target multipath group based on congestion parameters, examples will be given below, and will not be elaborated here.

So far, the process shown in Figure 3 is completed.

As can be seen from the process shown in Figure 3, in this example, if the first path with the highest forwarding weight (i.e., the optimal forwarding path for the data stream) experiences congestion, instead of directly abandoning this first path, the forwarding weight of this first path and the forwarding weight(s) of other non-optimal path(s) (with lower forwarding weight(s) than the first path) are dynamically adjusted, so that the data stream intended to be forwarded through the first path is forwarded through a combination of the first path and other path(s), thereby improving link bandwidth utilization.

It should be noted that the routing adjustment of the data stream requires the assistance of forwarding entries in specific implementations. Optionally, in this example, after determining the multipath group for any data stream, the ingress node of the data stream generates software forwarding entries corresponding to all paths in the multipath group. The software forwarding entry corresponding to each path in the multipath group is associated with the remote Group corresponding to the multipath group.

Optionally, in this example, the software forwarding entry corresponding to each path in the multipath group is used to describe the forwarding information of that path. Here, the forwarding information of each path includes at least: a path identifier and a forwarding weight of the path. Taking the multipath group of data streams 1-3 as an example, Figure 5 illustrates an example of the software forwarding entries corresponding to Path 1 and Path 2, respectively, in the multipath group of data streams 1-3.

As shown in Figure 5, the numerical value after ":" in a software forwarding entry corresponding to each path indicates the forwarding weight of the path. For example, in the software forwarding entry corresponding to Path 1, ":1" indicates the forwarding weight of Path 1 (e.g., that Path 1 carries 100% of the traffic for data streams 1-3). In the software forwarding entry corresponding to Path 2, ":0" indicates the forwarding weight of Path 2 (e.g., that Path 2 is not used to forward data streams 1-3).

After generating the software forwarding entries corresponding to all paths in the multipath group for any data stream, the ingress node of that data stream may further update these software forwarding entries corresponding to all paths to the hardware, to obtain hardware forwarding entries for the data stream to guide node to forward the data stream. Optionally, as an example, for each path in the multipath group, if the forwarding weight of the path is not the preset value, the software forwarding entry corresponding to that path may be issued to the hardware to obtain a hardware forwarding entry. However, if the forwarding weight of the path is the preset value, which indicates that the path is not used for forwarding, in order to save hardware resources, the issuing of the forwarding entry corresponding to that path to the hardware can be prohibited.

Furthermore, to avoid packet loss when changes occur for the paths within the multipath group, such as a reduction in the number of paths, this example sets the number of hardware forwarding entries for the data stream to a large fixed number L (referred to as the maximum number of entries for the "multipath group"), such as 128. In other words, this example ensures that the number of hardware forwarding entries for the data stream is L.

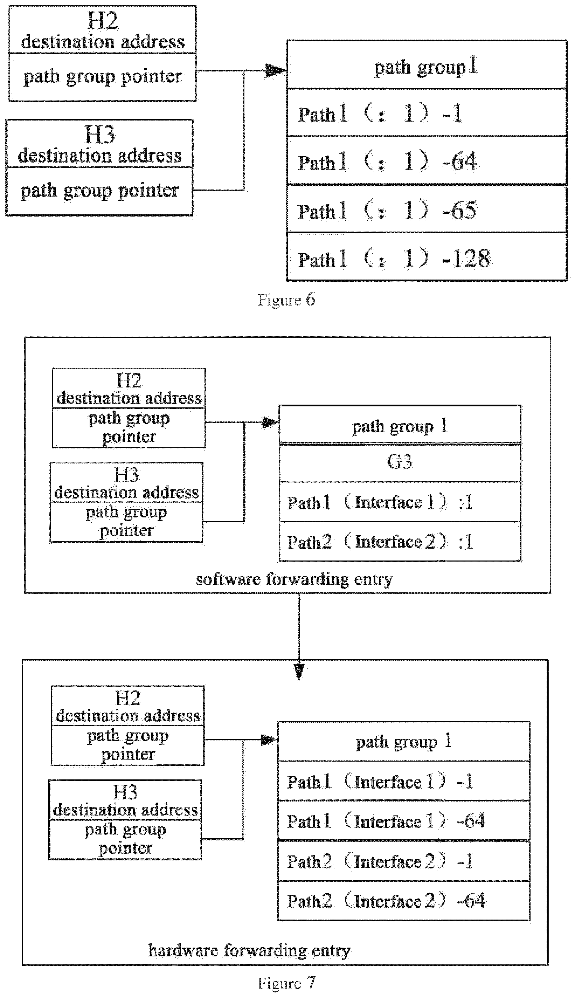

Taking data streams 1-3 as an example again, since the forwarding weight of Path 1 in the multipath group for data streams 1-3 is not the preset value, while the forwarding weight of Path 2 is the preset value, in this example, only the software forwarding entry corresponding to Path 1 may be issued to the hardware, resulting in a hardware forwarding entry (corresponding to Path 1). Combining this with the description of L above, this hardware forwarding entry will be repeated L times, such as 128 times, as shown in Figure 6.

It should be noted that after adjusting the forwarding weight of the first path with the highest forwarding weight and the forwarding weight(s) of other path(s) with lower forwarding weight(s) in the target multipath group in the aforementioned block 303, the following blocks can be further executed: for each path for which the adjustment is performed in the target multipath group, if the forwarding weight of that path is adjusted from its original preset value to another value, issuing the software forwarding entry corresponding to that path to the hardware to obtain the hardware forwarding entry for that path. Still taking data streams 1-3 as an example, if the forwarding weights of Path 1 and Path 2 in the multipath group for data streams 1-3 are adjusted according to block 303 above, the forwarding weight of Path 2 is no longer the preset value, as shown in Figure 7. In this example, the software forwarding entry corresponding to Path 2 can further be issued to the hardware, resulting in a hardware forwarding entry (corresponding to Path 2). Combining the description of L above, the final hardware forwarding entries for data streams 1-3 will show 64 hardware forwarding entries for Path 1 and 64 hardware forwarding entries for Path 2, as illustrated in Figure 7.

It should also be noted that based on the description of L, it is possible that the number of hardware forwarding entries for each path of a data stream may not be equal. For instance, taking L as 128, if there were originally hardware forwarding entries for two paths of data streams 1-3, and after adjusting the forwarding weights the hardware forwarding entries of one path are issued, the number of hardware forwarding entries for these three paths may not be equal when considering the description of L. In such cases, adjustments can be made adaptively. For example, there are 40 hardware forwarding entries for Path 1, 44 hardware forwarding entries for Path 2, and 44 hardware forwarding entries for Path 3, it can be ensured that the total number of hardware forwarding entries for all paths of data streams 1-3 sums up to L, such as 128.

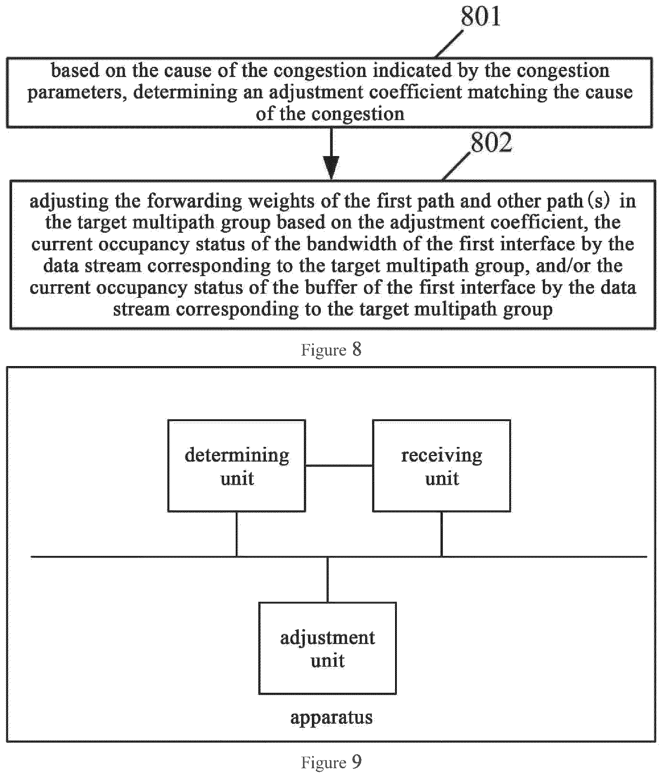

The following is a description of Block 303 mentioned above:
Refer to Figure 8, which shows the implementation flowchart for Block 303 provided in the example of the present disclosure. As shown in Figure 8, the block can include the following blocks:
Block 801: based on the cause of the congestion indicated by the congestion parameters, determining an adjustment coefficient matching the cause of the congestion.

As an example, the congestion parameter(s) can include: a maximum bandwidth set for the second interface, a currently occupied bandwidth of the second interface, a maximum buffer set for the second interface, and/or a currently occupied buffer of the second interface.

In an example, if the currently occupied bandwidth of the second interface exceeds a bandwidth threshold value corresponding to the second interface, the cause of the congestion is determined to be that the occupied bandwidth of the second interface exceeds the threshold value. In an example, if the currently occupied buffer of the second interface exceeds a buffer threshold value corresponding to the second interface, the cause of the congestion is determined to be that the occupied buffer of the second interface exceeds the threshold value. In an example, if the currently occupied bandwidth of the second interface exceeds the corresponding bandwidth threshold value of the second interface, and the currently occupied buffer of the second interface exceeds the corresponding buffer threshold value of the second interface, the congestion reason is determined to be that the occupied bandwidth of the second interface exceeds a threshold value and the occupied buffer of the second interface exceeds a threshold value.

Based on this, at Block 801, based on the cause of the congestion indicated by the congestion parameters, determining the adjustment coefficient matching the cause of the congestions can include:
Block a1: if the cause of the congestion is that the occupied bandwidth of the second interface exceeds a threshold value, determining the adjustment coefficient matching the cause of the congestion based on the maximum bandwidth set for the second interface and the currently occupied bandwidth of the second interface. For example, the adjustment coefficient can be determined using the formula: F = Occupied Bandwidth of the Second Interface / Maximum Bandwidth set for the Second Interface; wherein F represents the adjustment coefficient.
Block a2: if the cause of the congestion is that the occupied buffer of the second interface exceeds a threshold value, determining the adjustment coefficient matching the cause of the congestion based on the maximum buffer set for the second interface and the currently occupied buffer of the second interface. For example, the adjustment coefficient can be determined using the formula: F = Occupied Buffer of the Second Interface / Maximum Buffer Set for the Second Interface; wherein F represents the adjustment coefficient.
Block a3: if the cause of the congestion is that the occupied bandwidth of the second interface exceeds a threshold value and the occupied buffer of the second interface exceeds a threshold value, determining the adjustment coefficient matching the cause of the congestion based on the maximum bandwidth set for the second interface, the currently occupied bandwidth of the second interface, the maximum buffer set for the second interface, and the currently occupied buffer of the second interface. For example, the adjustment coefficient 1 (F1) can be determined using the following formula: F1 = Occupied Buffer of the Second Interface / Maximum Buffer set for the Second Interface; wherein F1 represents the adjustment coefficient 1. The adjustment coefficient 2 (F2) can be determined by the following formula: F2 = Occupied Bandwidth of the Second Interface / Maximum Bandwidth set for the Second Interface; wherein F2 represents the adjustment coefficient 2. The one with a larger value between F1 and F2 may be selected as the adjustment coefficient matching the cause of the congestion.

Block 802: adjusting the forwarding weights of the first path and other path(s) in the target multipath group based on the adjustment coefficient, and the current occupancy status of the bandwidth of the first interface by the data stream corresponding to the target multipath group and/or the current occupancy status of the buffer of the interface 1 by the data stream corresponding to the target multipath group.

In this example, the ingress node of any data stream maintains an interface status table corresponding to the local interfaces that have enabled the adaptive routing function. The interface status table includes the bandwidth occupancy of the interfaces. For example, taking interfaces 1, 2, 3, and 4 of node 1 in Figure 2 as an illustration, the interface status table of Node 1 is shown in Table 1.

**Table 1**

| interface | Bandwidth occupancy, in kbps | Buffer occupancy, in bytes |
|---|---|---|
| interface 1 | BW1 | BF1 |
| interface2 | BW2 | BF2 |
| interface3 | BW3 | BF3 |
| interface4 | BW4 | BF4 |

Based on this, in order to facilitate the adjustment of the forwarding weights of paths, based on the aforementioned interface status table and the hardware forwarding entries corresponding to each path in the multipath groups, this example details the occupancy status of the bandwidth and/or buffer of each interface by each multipath group (specifically, by the data stream corresponding to each multipath group). For example, taking Node 1 in Figure 2 as an example, suppose the egress interfaces of the software forwarding entries for paths in the multipath group of a data stream (e.g., data stream 1) are Interface 1, Interface 2, Interface 3, and Interface 4 respectively, taking bandwidth occupancy as an example, Table 2 illustrates the occupancy status of the bandwidth of Interfaces 1 to 4 by various multipath groups:

**Table 2**

| | Bandwidth occupancy of the interface by the multipath group of data stream 1 | Bandwidth occupancy of the interface by the multipath group of data stream n |
|---|---|---|
| Interface 1 | M:a | M:c |
| Interface 2 | N:b | |
| Interface 3 | | N:d |
| Interface 4 | | |

In the table, "M" represents the optimal path, "N" represents the non-optimal path; the number after ":" indicates the occupied bandwidth of the interface.

Based on the above description, in this example, the above-mentioned block 802 may specifically include:
block b1: if the cause of the congestion is that the occupied bandwidth of the second interface exceeds the threshold value, determining a data amount of a data stream corresponding to the target multipath group to be dropped from the first interface based on the currently occupied bandwidth of the first interface by the data stream corresponding to the target multipath group, as well as the adjustment coefficient; selecting a target path from the paths in the target multipath group with forwarding weights lower than that of the first path; wherein the current available bandwidth of the target path supports the said data amount. Then block b4 is performed afterwards.

Optionally, when block b 1 is specifically implemented, the product of the currently occupied bandwidth of the first interface by the target multipath group and the adjustment coefficient can be calculated first. Then, the result of this calculation will be used as the data amount of the data stream corresponding to the target multipath group to be dropped from the first interface.

For example, the optional ratios for Interface 1 can be set to 60%, 50%, 40%, 30%, 20%), or 10%). These optional ratios are polled in the set order. The polled ratio, such as 60%), is used as the specified ratio. The product of the specified ratio of the currently occupied bandwidth of the first interface by the target multipath group and the adjustment coefficient is then calculated to get the result. Next, whether there is any path with a currently available bandwidth accommodating the specified data amount (i.e., the bandwidth threshold value of the path won't be exceeded after incorporating the data stream) among paths of which each a forwarding weight is lower than that of the first path (including all local interfaces except the first interface) in the target multipath group is checked,. If there is such a path, it is taken as the target path, and the current process ends. If there is no such path, whether there is any remaining ratio to be polled for Interface 1 is judged. If there is, the polling continues, and the process returns to the step of using the polled ratio, such as 60%), as the specified ratio.

Block b2: if the cause of the congestion is that the occupied buffer of the second interface exceeds the threshold value, determining the data amount of the data stream corresponding to the target multipath group to be dropped from the first interface based on the currently occupied buffer of the first interface by the data stream corresponding to the target multipath group, as well as the adjustment coefficient; selecting a target path from the path(s) in the target multipath group with forwarding weight(s) lower than the first path; wherein the current available buffer of the target path should support the aforementioned data amount. Then block b4 is performed.

This block b2 is similar to the aforementioned block b1 and will not be elaborated further.

Block B3: if the cause of the congestion is that both the occupied bandwidth of the second interface and the occupied buffer of the second interface exceed their respective threshold values, determining the data amount of the data stream corresponding to the target multipath group to be dropped from the first interface based on the currently occupied bandwidth of the first interface by the data stream corresponding to the target multipath group, the currently occupied buffer of the first interface by the data stream corresponding to the target multipath group, as well as the adjustment coefficient; selecting a target path from the path(s) in the target multipath group with forwarding weight(s) lower than the first path; wherein the currently available buffer and currently available bandwidth of the target path should support the aforementioned data amount. Then block b4 is performed.

This block b3 is similar to the aforementioned block b1 and will not be elaborated further. It is important to note that there is no fixed chronological order among blocks b 1 to b3.

Block b4: adjusting the forwarding weight of the first path and the forwarding weight of the target path based on the aforementioned data amount.

Taking the cause of the congestion is that the occupied bandwidth of the second interface exceeds the threshold value as an example, the difference between the currently occupied bandwidth of the first interface by the target multipath group and the occupied bandwidth by the aforementioned data amount is calculated; and the forwarding weights of the first path and the target path based on this difference and the data amount dropped to the target path are adjusted. For instance, if the difference is the same as the occupied bandwidth by the aforementioned data amount, assuming that there are only the first path and the target path in the target multipath group, the weights of the first path and of the target path can be set to be equal, such as both at 50%, to indicate that the first path and the target path will share the forwarding of the data stream subsequently. Of course, if there is/are other path(s) in the target multipath group besides the first path and the target path, adjustments can be made adaptively, which are not specifically limited in this example.

The process of the method shown in Figure 8 is completed.

The process shown in Figure 8 ultimately achieves how to adjust the forwarding weights of the first path and other path(s) within the target multipath group.

Below, the method provided in the examples of this application will be described through a specific example, combined with the networking illustrated in Figure 2:
For ease of understanding, it is assumed that the maximum bandwidth of each interface is 1000kbps, and the maximum buffer of each interface is 1000 bytes. The upper threshold value for interface's bandwidth occupancy is 800kbps, and the lower threshold value is 200kbps. The upper threshold value for interface's buffer occupancy is 800 bytes, and the lower threshold value is 200 bytes. Taking Interfaces 1, 2, 3, and 4 of Node 1 shown in Figure 2 as examples, the interface status table for Node 1 is presented in Table 3:

**Table 3**

| interface | Bandwidth occupancy, in kbps | Buffer occupancy, in bytes |
|---|---|---|
| interface 1 | 700 | 500 |
| interface2 | 600 | 500 |
| interface3 | 400 | 200 |
| interface4 | 300 | 400 |

The occupancy status of each interface in Node 1 by the data stream corresponding to each multipath group is shown in Table 4::

**Table 4**

| | Bandwidth occupancy status of interface by multipath group 1 of data stream 1: (multipath group 1 is associated with G3) | Bandwidth occupancy status of interface by multipath group 2 of data stream 2: (multipath group 2 is associated with G4) |
|---|---|---|
| interface 1 | M:300 | M:300 |
| interface2 | N:0 | |
| interface3 | | N:0 |
| interface4 | | |

In Table 4, "M" represents an optimal path, and "N" represents a non-optimal path. The numbers following ":" indicate the bandwidth occupancy of the interface by a path.

As shown in Figure 2, when Node 1 receives an ARN (Advertisement Routing Notification) sent by Node 2 through its local Interface 1, the ARN sent by Node 2 carries at least the following information: the Group (i.e., G3) where the peer node connected to the congested Interface 1 of Node 2 is located, as well as congestion parameters.

Optionally, the congestion parameters can include:
1) Total port bandwidth: 1000;
2) Occupied port bandwidth: 833;
3)Maximum port buffer: 1000;
4) Occupied port buffer: 600.

The congestion parameters indicate that the cause of the congestion is that the occupied bandwidth exceeds the threshold value.

Node 1 calculates the adjustment coefficient F based on the cause of the congestion: F = 833/1000 = 0.833. Afterwards, Node 1 recognizes that the downstream interface (i.e., Interface 1 of Node 2) of the node connected to its Interface 1 (Node 2), where the ARN was received, is experiencing congestion. Then, using the G3 carried in the ARN, Node 1 locates the multipath group with a remote Group of G3. It is assumed that a multipath group found in this example is Multipath Group 1 as shown in Table 4.

Subsequently, Node 1 performs a traversal on the optional ratios set for the optimal path (the path containing Interface 1) within the identified Multipath Group 1. Assuming that upon the traversal, the optional ratio of 60% is encountered, Node 1 sets this as the specified ratio, and then multiplies the occupied bandwidth 300kbps of Interface 1 in Table 4 by the specified ratio of 60%, and further multiplies the result by the aforementioned adjustment coefficient of 0.833. This ultimately yields the data amount (150kbps) for Data Stream 1 corresponding to Multipath Group 1 to be dropped from Interface 1. Following this, Node 1 checks whether the currently available bandwidth of the non-optimal path in Multipath Group 1, i.e., the path containing Interface 2, supports this data amount. As shown in Table 3, Interface 2's current bandwidth occupancy is 600kbps. Adding the 150kbps, Interface 2's subsequent bandwidth occupancy would be 750kbps, which is below the upper threshold value of bandwidth, which means that Interface 2's currently available bandwidth supports the data amount. Then the path containing Interface 2 is determined as the target path, and the process of selecting the target path ends. If Interface 2's currently available bandwidth does not support the data amount, Node 1 continues to perform a traversal on the optional ratios set for the optimal path in Multipath Group 1, i.e., repeating the block of setting the encountered optional ratio as the specified ratio.

Taking the above described case of Interface 2's currently available bandwidth supporting the data amount as an example, according to the description above, the bandwidth occupancy of Interface 1 in Table 4 by Multipath Group 1 is updated to 300kbps - 150kbps = 150kbps; the bandwidth occupancy of the Interface 2 in Table 4 by Multipath Group 1 is updated to 0 + 150kbps = 150kbps. Thus, Interface 1 and Interface 2 each undertake 50% of the data stream corresponding to Multipath Group 1, resulting in a forwarding weight ratio of 1:1 (or 50% each) for Path 1 (containing Interface 1) and Path 2 (containing Interface 2). Since the initial forwarding weight of the Path 2 was set to 0, the software forwarding entry corresponding to the path 2 was not issued to the hardware, as illustrated in Figure 6. However, after the forwarding weight of the Path 2 is adjusted, which is no longer as 0, as the software forwarding entry illustrated in Figure 7, the software forwarding entry for Path 2 can be issued to the hardware, resulting in the final hardware forwarding entry shown in Figure 7.

It should be noted that in some examples of the present disclosure, once Node 2 detects that the state of Interface 1 has shifted from congestion to be normal, the following recovery operations may be performed: restoring the forwarding weights of paths, which were adjusted due to the congestion, back to their respective original unadjusted values. Additionally, the current hardware forwarding entries may be updated to those hardware forwarding entries before the congestion. Of course, in other examples, Node 2 detects that the state of Interface 1 has shifted from congestion to be normal, the aforementioned recovery operations may not to be performed to save resources.

The methods provided in examples of the present disclosure are described above, and an apparatus provided in an example of the present disclosure will be described below.

Please refer to Figure 9, it is a diagram of the structure of the apparatus provided in an example of the present disclosure. The apparatus is applied to a first network node in a topology networking. The topology networking consists of multiple node groups (Groups), and any two network nodes within the same Group are interconnected, and network nodes in different Groups are also interconnected. The first network node is located in the first Group. The apparatus includes:
**a** determining unit, to determine, when the first network node serves as an ingress node for any data stream entering the topology networking, a multipath group for forwarding the data stream, wherein the multipath group includes following paths: at least one optimal path for forwarding the data stream, and at least one non-optimal path for forwarding the data stream; wherein the non-optimal path refers to a loop-free path other than the optimal path; each path in the multipath group is set with a corresponding forwarding weight, with a forwarding weight of the optimal path being greater than that of the non-optimal path; the multipath group is associated with a remote Group, which refers to the Group where the network node accessed by the destination of the data stream is located;
**a** receiving unit, to receive a routing congestion notification (ARN) sent by a second network node in the same Group through the first interface of the first network node, wherein the ARN is sent by the second network node when congestion on a local second interface is detected; the ARN carries information indicating a second Group and congestion parameters; the second Group refers to a Group where a peer network node connected to the congested second interface is located; the congestion parameters are used to indicate the cause of the congestion on the second interface;
**an** adjustment unit, to find a target multipath group from the multipath groups of data streams, wherein the remote Group associated with the target multipath group is the second Group; to adjust, based on the congestion parameters, the forwarding weights of the first path with the highest forwarding weight and other path(s) with lower forwarding weight(s) than the first path in the target multipath group; wherein the first path is a path where the first interface is located, and an adjusted forwarding weight of the first path is less than that before adjustment, and the adjusted forwarding weight(s) of the other path(s) are greater than that/those before adjustment, so that the data stream intended to be forwarded through the first path is forwarded through a combination of the first path and the other path(s).

Optionally, the forwarding weight of any non-optimal path is initially a preset value; and wherein,
the determining unit is further to perform the following blocks: for the multipath group of each data stream, determining the software forwarding entry corresponding to each path in the multipath; wherein the software forwarding entry of any path includes: a path identifier and a forwarding weight of the path; for each path in the multipath group, if the forwarding weight of the path is not the preset value, issuing the software forwarding entry corresponding to the path to the hardware to obtain the hardware forwarding entry corresponding to the path, so as to guide the forwarding of the data stream;
after adjusting the forwarding weights of the first path with the highest forwarding weight and the forwarding weight(s) of the other path(s) with lower forwarding weight(s) than the first path in the target multipath group, the adjustment unit further performs the following blocks: for each adjusted path in the target multipath group, if the forwarding weight of the path is adjusted from the original preset value to another value, issuing the software forwarding entry corresponding to the path to the hardware to obtain the hardware forwarding entry corresponding to the path.

Optionally, the ARN is a UDP packet, and the destination IP of the ARN is a specified multicast address, which is used to control all network nodes in the first Group other than the second network node to receive the ARN.

Optionally, the block of adjusting, based on the congestion parameters, the forwarding weight of the first path with the highest forwarding weight and the forwarding weight(s) of the other path(s) with the lower forwarding weight(s) than the first path in the target multipath group includes:
based on the cause of the congestion indicated by the congestion parameters, determining an adjustment coefficient matching the cause of the congestion; adjusting the forwarding weights of the first path and other path(s) in the target multipath group based on the adjustment coefficient, the occupancy status of the bandwidth of the first interface by the data stream corresponding to the target multipath group, and/or the occupancy status of the buffer of the first interface by the data stream corresponding to the target multipath group.

Optionally, the congestion parameters include: the currently occupied bandwidth of the second interface, and the currently occupied buffer of the second interface;
wherein, if the currently occupied bandwidth of the second interface exceeds the bandwidth threshold value corresponding to the second interface, the cause of the congestion is determined to be that the occupied bandwidth of the second interface exceeds the threshold value; if the currently occupied buffer of the second interface exceeds the buffer threshold value corresponding to the second interface, the cause of the congestion is determined to be that the occupied buffer of the second interface exceeds the threshold value; if both the currently occupied bandwidth of the second interface exceeds the bandwidth threshold value corresponding to the second interface and the currently occupied buffer of the second interface exceeds the buffer threshold value corresponding to the second interface, the cause of the congestion is determined to be that both the occupied bandwidth of the second interface exceeds a threshold value and the occupied buffer of the second interface exceeds a threshold value.

Optionally, the congestion parameters further include: the maximum bandwidth set for the second interface, and the maximum buffer set for the second interface; wherein
the block of based on the cause of the congestion indicated by the congestion parameters, determining an adjustment coefficient matching the cause of the congestion includes:
if the cause of the congestion is that the occupied bandwidth of the second interface exceeds the threshold value, determining the adjustment coefficient matching the cause of the congestion based on the maximum bandwidth set for the second interface and the currently occupied bandwidth of the second interface;
if the cause of the congestion is that the occupied buffer of the second interface exceeds the threshold value, determining the adjustment coefficient matching the cause of the congestion based on the maximum buffer set for the second interface and the currently occupied buffer of the second interface;
if the cause of the congestion is that both the occupied bandwidth of the second interface exceeds its threshold value and the occupied buffer of the second interface exceeds its threshold value, determining the adjustment coefficient matching the cause of the congestion based on the maximum bandwidth set for the second interface, the currently occupied bandwidth of the second interface, as well as the maximum buffer set for the second interface, the currently occupied buffer of the second interface.

Optionally, the block of adjusting the forwarding weights of the first path and other path(s) in the target multipath group based on the adjustment coefficient, the current occupancy status of the bandwidth of the first interface by the data stream corresponding to the target multipath group, and/or the current occupancy status of the buffer of the first interface by the data stream corresponding to the target multipath group includes:
if the cause of the congestion is that the occupied bandwidth of the second interface exceeds the threshold value, determining the data amount of the data stream corresponding to the target multipath group to be dropped from the first interface based on the currently occupied bandwidth of the first interface by the data stream corresponding to the target multipath group, as well as the adjustment coefficient; selecting a target path from the path(s) in the target multipath group with forwarding weight(s) lower than that of the first path; wherein a current available buffer of the target path supports the data amount;
if the cause of the congestion is that the occupied buffer of the second interface exceeds the threshold value, determining the data amount of the data stream corresponding to the target multipath group to be dropped from the first interface based on the currently occupied buffer of the first interface by the data stream corresponding to the target multipath group, as well as the adjustment coefficient; selecting a target path from the path(s) in the target multipath group with forwarding weight(s) lower than that of the first path; wherein the currently available buffer of the target path supports the data amount;
if the cause of the congestion is that both the occupied bandwidth of the second interface exceeds the threshold value and the occupied buffer of the second interface exceeds the threshold value, determining the data amount of the data stream corresponding to the target multipath group to be dropped from the first interface based on the currently occupied bandwidth and currently occupied buffer of the first interface by the data stream corresponding to the target multipath group, as well as the adjustment coefficient; selecting a target path from the path(s) in the target multipath group with forwarding weight(s) lower than that of the first path; wherein the currently available buffer and bandwidth of the target path support the data amount;
adjusting the forwarding weight of the first path and the forwarding weight of the target path based on the data amount.

Thus, the description of the apparatus shown in Figure 9 is completed.

The detailed processes for realizing the functions and roles of each unit in the aforementioned apparatus can specifically refer to the corresponding blocks of the aforementioned method, and thus will not be elaborated here.

Regarding the apparatus examples, since they basically correspond to the method examples, please refer to the relevant parts of the method examples for details. The apparatus examples described above are merely illustrative, and the modules described as separate components may or may not be physically separated. The components shown as modules may or may not be physical modules, i.e., they can be located in one place or distributed across multiple network modules. Depending on actual needs, some or all of the modules can be selected to achieve the objectives of this specification. Ordinary technicians in the field can understand and implement them without creative effort.

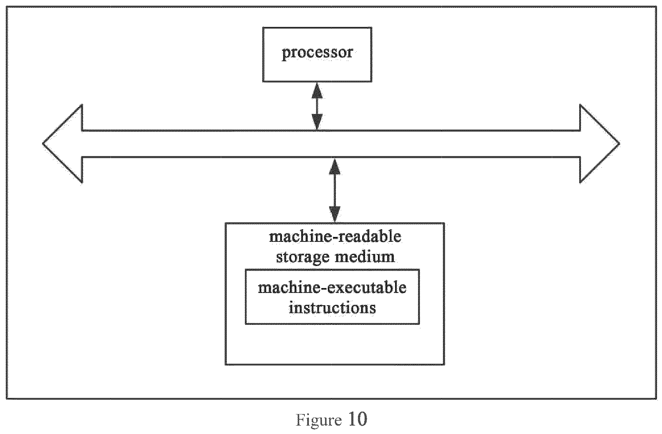

Correspondingly, an example of the present disclosure also shows a hardware structure diagram of the apparatus shown in Figure 9. As specifically shown in Figure 10, the electronic device can be a device implementing the aforementioned methods. As shown in Figure 10, the hardware structure includes:
**a** processor and a machine-readable storage medium, wherein the machine-readable storage medium stores machine-executable instructions that can be executed by the processor;
the processor is used to execute the machine-executable instructions to implement the method disclosed in the aforementioned examples.

For instance, the aforementioned machine-readable storage medium can be any electronic, magnetic, optical, or other physical storage device capable of containing or storing information such as executable instructions, data, etc. For example, the machine-readable storage medium can be RAM (Random Access Memory), volatile memory, non-volatile memory, flash memory, storage drives (such as hard disk drives), solid-state drives, any type of storage disk (such as optical disks, DVDs, etc.), or similar storage media, or combinations thereof.

Thus, the description of the electronic device shown in Figure 10 is completed.

The above describes specific examples of this specification. Other examples are within the scope of the appended claims. In some cases, the actions or blocks recited in the claims may be performed in an order different from that in the examples and still achieve the desired results. Additionally, the processes depicted in the drawings do not necessarily require the specific order or continuous sequence shown to achieve the desired results. In certain examples, multitasking and parallel blocking may also be feasible or advantageous.

After considering the specification and practicing the invention claimed herein, those skilled in the art will readily conceive of other examples of this specification. This specification is intended to cover any variations, uses, or adaptations of this specification that follow the general principles of this specification and include common knowledge or conventional technical means in the technical field that are not claimed herein. The specification and examples are only considered illustrative, and the true scope and spirit of this specification are pointed out by the following claims.

It should be understood that this specification is not limited to the precise structures described above and shown in the drawings, and various modifications and changes can be made without departing from its scope. The scope of this specification is limited only by the appended claims.

**The** above is merely a preferred example of this specification and is not intended to limit this specification. Any modifications, equivalent substitutions, improvements, etc., made within the spirit and principles of this specification should be included within the scope of protection of this specification.

## Claims

1. A routing adjustment method, wherein the method is applied to a first network node in a topological networking consisting of multiple node groups, Groups, wherein any two network nodes within a same Group are interconnected, and network nodes within different Groups are interconnected; the first network node is located in a first Group; the method includes:
determining, by the first network node as an ingress node for any data stream entering the topological networking, a multipath group for forwarding the data stream; wherein the multipath group includes following paths: one or more optimal paths for forwarding the data stream, and one or more non-optimal paths for forwarding the data stream; wherein a non-optimal path refers to a loop-free path other than the optimal path; each path in the multipath group is set with a corresponding forwarding weight, with a forwarding weight of the optimal path being greater than that of the non-optimal path; the multipath group is associated with a remote Group, which refers to a Group where a network node accessed by a destination of the data stream is located;
receiving, by the first network node, a route congestion notification, ARN, sent by a second network node in a same Group through a first interface; wherein the ARN is sent by the second network node when congestion on a local second interface is detected; the ARN carries information indicating a second Group and congestion parameters; the second Group refers to a Group where a peer network node connected to a congested second interface is located; a congestion parameter is used to indicate a cause of the congestion on a second interface;
finding, by the first network node, a target multipath group from the multipath groups of data streams, and adjusting, based on the congestion parameters, a forwarding weight of a first path with a highest forwarding weight and forwarding weight(s) of other path(s) with lower forwarding weight(s) than the forwarding weight of the first path in the target multipath group; wherein a remote Group associated with the target multipath group is the second Group, the first path is a path where the first interface is located, an adjusted forwarding weight of the first path is less than that before adjustment, and adjusted forwarding weight(s) of the other path(s) are greater than those before adjustment, so that a data stream intended to be forwarded through the first path is forwarded through a combination of the first path and the other path(s).

2. The method according to claim 1, wherein, a forwarding weight of any non-optimal path is initially a preset value;
before receiving the ARN, the method further includes: for a multipath group of each data stream, determining a software forwarding entry corresponding to each path in the multipath; wherein a software forwarding entry of any path includes: a path identifier, a forwarding weight of the path; for each path in the multipath group, if the forwarding weight of the path is not the preset value, issuing a software forwarding entry corresponding to the path to hardware to obtain a hardware forwarding entry corresponding to the path, so as to guide forwarding of the data stream;
after adjusting the forwarding weight of the first path with the highest forwarding weight and the forwarding weight(s) of the other path(s) with the lower forwarding weight(s) than the forwarding weight of the first path in the target multipath group, the method further includes: for each adjusted path in the target multipath group, if the forwarding weight of the path is adjusted from an original preset value to another value, issuing the software forwarding entry corresponding to the path to the hardware to obtain the hardware forwarding entry corresponding to the path.

3. The method according to claim 1, wherein the ARN is a UDP packet, a destination IP of the ARN is a specified multicast address, and the specified multicast address is used to control all network nodes in the first Group other than the second network node, to receive the ARN.

4. The method according to claim 1, wherein adjusting, based on the congestion parameters, the forwarding weight of the first path with the highest forwarding weight and the forwarding weight(s) of the other path(s) with the lower forwarding weight(s) than the forwarding weight of the first path in the target multipath group includes:
based on the cause of the congestion indicated by the congestion parameters, determining an adjustment coefficient matching the cause of the congestion ;
adjusting the forwarding weights of the first path and of the other path(s) in the target multipath group based on the adjustment coefficient, current occupancy status of a bandwidth of the first interface by a data stream corresponding to the target multipath group, and/or current occupancy status of a buffer of the first interface by a data stream corresponding to the target multipath group.

5. The method according to claim 4, wherein the congestion parameters include: a currently occupied bandwidth of the second interface and/or a currently occupied buffer of the second interface;
wherein, if the currently occupied bandwidth of the second interface exceeds a bandwidth threshold value corresponding to the second interface, the congestion parameters indicate that the cause of the congestion is that the occupied bandwidth of the second interface exceeds a threshold value; if the currently occupied buffer of the second interface exceeds a buffer threshold value corresponding to the second interface, the congestion parameters indicate that the cause of the congestion is that the occupied buffer of the second interface exceeds a threshold value; and if the currently occupied bandwidth of the second interface exceeds a bandwidth threshold value corresponding to the second interface and the currently occupied buffer of the second interface exceeds a buffer threshold value corresponding to the second interface, the congestion parameters indicate that the cause of the congestion is that both the occupied bandwidth of the second interface and the occupied buffer of the second interface exceed their respective threshold values.

6. The method according to claim 4 or 5, wherein the congestion parameters further include: a maximum bandwidth set for the second interface and/or a maximum buffer set for the second interface; and
based on the cause of the congestion indicated by the congestion parameters, determining the adjustment coefficient matching the cause of the congestion includes:
if the cause of the congestion is that an occupied bandwidth of the second interface exceeds a threshold value, determining the adjustment coefficient matching the cause of the congestion based on the maximum bandwidth set for the second interface and a currently occupied bandwidth of the second interface;
if the cause of the congestion is that an occupied buffer of the second interface exceeds a threshold value, determining the adjustment coefficient matching the cause of the congestion based on the maximum buffer set for the second interface and a currently occupied buffer of the second interface;
if the cause of the congestion is that both an occupied bandwidth of the second interface and an occupied buffer of the second interface exceed their respective threshold values, determining the adjustment coefficient matching the cause of the congestion based on the maximum bandwidth set for the second interface and a currently occupied bandwidth of the second interface, as well as the maximum buffer set for the second interface and a currently occupied buffer of the second interface.

7. The method according to claim 4, wherein adjusting the forwarding weights of the first path and of the other path(s) in the target multipath group based on the adjustment coefficient, the current occupancy status of the bandwidth of the first interface by the data stream corresponding to the target multipath group, and/or the current occupancy status of the buffer of the first interface by the data stream corresponding to the target multipath group includes:
if the cause of the congestion is that an occupied bandwidth of the second interface exceeds a threshold value, determining a data amount of a data stream corresponding to the target multipath group to be dropped from the first interface based on a bandwidth of the first interface currently occupied by the data stream corresponding to the target multipath group, as well as the adjustment coefficient; selecting a target path with a forwarding weight lower than that of the first path from the target multipath group; wherein a current available bandwidth of the target path supports the data amount;
if the cause of the congestion is that an occupied buffer of the second interface exceeds a threshold value, determining a data amount of a data stream corresponding to the target multipath group to be dropped from the first interface based on a buffer of the first interface currently occupied by the data stream corresponding to the target multipath group, as well as the adjustment coefficient; selecting a target path with a forwarding weight lower than that of the first path from the target multipath group; wherein a currently available buffer of the target path supports the data amount;
if the cause of the congestion is that an occupied bandwidth of the second interface exceeds a threshold value and an occupied buffer of the second interface exceeds a threshold value, determining a data amount of a data stream corresponding to the target multipath group to be dropped from the first interface based on a bandwidth of the first interface currently occupied by the data stream corresponding to the target multipath group, a buffer of the first interface currently occupied by the data stream corresponding to the target multipath group, as well as the adjustment coefficient; selecting a target path with a forwarding weight lower than that of the first path from the target multipath group; wherein a currently available buffer and a currently available bandwidth of the target path support the data amount; and
adjusting the forwarding weight of the first path and a forwarding weight of the target path based on the data amount.

8. An electronic device, wherein, the electronic device comprises:
a processor and a machine-readable storage medium, wherein the machine-readable storage medium stores machine-executable instructions that can be executed by the processor;
the processor is used to execute the machine-executable instructions to implement the method according to any one of claims 1 to 7.

9. A machine-readable storage medium having machine-executable instructions stored thereon, wherein the machine-executable instructions are executed by a processor to implement the method according to any one of claims 1 to 7.
